(19) Europäisches Patentamt
European Patent Office
Office européen des brevets

(11) **EP 0 493 551 B1**

(12) **EUROPEAN PATENT SPECIFICATION**

(45) Date of publication and mention
of the grant of the patent:
**17.04.1996 Bulletin 1996/16**

(21) Application number: **91912153.3**

(22) Date of filing: **01.07.1991**

(51) Int Cl.6: **H04N 1/32**, H04B 7/26

(86) International application number:
**PCT/EP91/01222**

(87) International publication number:
**WO 92/02100 (06.02.1992 Gazette 1992/04)**

(54) **FACSIMILE-TO-CELLULAR TELEPHONE SYSTEM INTERFACE**

SCHNITTSTELLE FAKSIMILE-ZU-ZELLULAR TELEFONSYSTEM

INTERFACE ENTRE UN SYSTEME DE TELEPHONE CELLULAIRE ET UN TELECOPIEUR

(84) Designated Contracting States:
**AT BE CH DE DK ES FR GB GR IT LI LU NL SE**

(30) Priority: **19.07.1990 GB 9015863**

(43) Date of publication of application:
**08.07.1992 Bulletin 1992/28**

(73) Proprietor: **MOTOROLA, INC.**
**Schaumburg, IL 60196 (US)**

(72) Inventor: **CRISTENSEN, Finn**
**DK-Greve 2670 (DK)**

(74) Representative: **Dunlop, Hugh Christopher et al**
**Motorola,**
**European Intellectual Property,**
**Midpoint,**
**Alencon Link**
**Basingstoke, Hampshire RG21 7PL (GB)**

(56) References cited:
- **FUNKSCHAU. no. 3, January 1990, MUNCHEN DE pages 50 - 53; F. HILLEBRAND: 'Datenkommunikation im digitalen Mobilfunknetz ' see the whole document**
- **39TH IEEE VEHICULAR TECHNOLOGY CONFERENCE vol. 2, May 1989, SAN-FRANCISCO (US) pages 656 - 659; T. SATO ET AL: 'DATA TRANSMISSION PROTOCOL IN INTEGRATED MOBILE COMMUNICATION NETWORK '**

## Description

Background to the Invention

This invention relates to interfaces between facsimile machines and cellular telephone systems (including both cellular subscriber terminals and the fixed part of the system, such as the mobile switching centre and the interworking function). The cellular radio telephone system could for example be GSM. The intention is to include telefax services in a cellular system (eg. GSM), utilizing commercially available facsimile machines.

Summary of the Prior Art

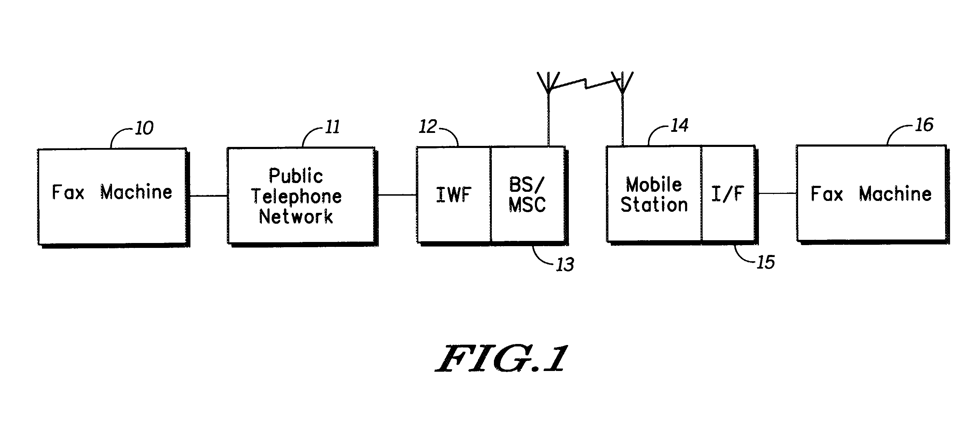

GSM recommendation 03.45 describes the technical realization of an interface for using a group 3 facsimile machine, constructed according to the CCITT T.4 and T.30 recommendations. The cellular telephone network architecture of such an arrangement with facsimile machines connected is shown in Figure 1. In that figure, there is shown a first facsimile machine 10 connected to a public telephone network 11, in turn connected to an inter-working function (IWF) 12 of a cellular radio system. The IWF is associated with a base station and mobile switching centre 13, which in turn is in radio communication with a mobile station 14. The mobile station 14 has an interface 15 to which a second facsimile machine 16 is connected.

The GSM 03.45 recommendation has a number of technical problems briefly described in GSM documents: 203/90. 213/90. 222/90 and 223/90.

One serious problem comes from the T.30 protocol which is used by two group 3 facsimile machines for exchanging information necessary for transmission of documents. This exchange of information has the form of a series of commands and responses sent as binary coded signals, which each can have a duration of up to approximately 1.3 seconds. The commands and responses consist of two parts: a 'preamble' which is defined as one second of a special bit pattern to synchronize the protocol between the two facsimile machines; and at the end a so called "HDLC frame' containing the actual command or response (duration: approximately 0.3 seconds).

The preamble is defined in T.30 section 5.3.1 to last for 1 second $\pm$ 15%. In T.30 section 5.3.5 it is stated that the preamble should be used prior to the first frame and that subsequent frames need only one flag sequence (lasting approximately 0.03 seconds).

A command sent by one facsimile machine is normally followed by a response from the other facsimile machine. The machine which sent the command must wait for a response in a limited period of time. When the amount of time has gone, it must send the command again (up to a total of three times). This timeout is specified in the T.30 recommendation section 5.4.2 as 3 seconds $\pm$ 15%.

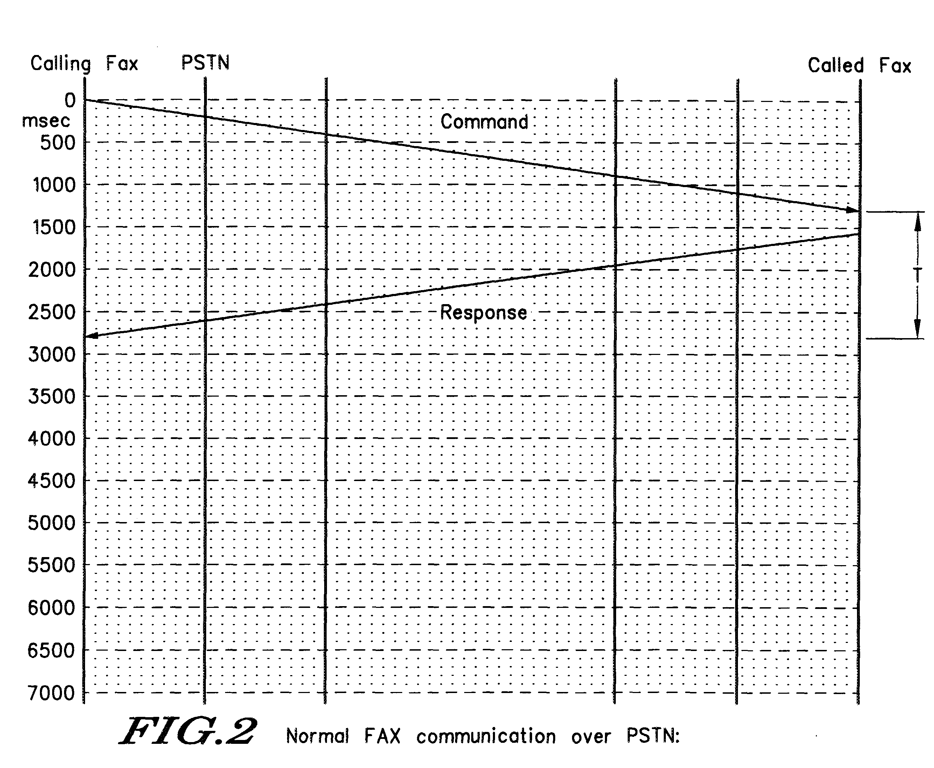

The T.30 specification is originally intended for facsimile machines operating in a standard public telephone network, where delays in the order of seconds are unlikely. See Figure 2. In that figure, a situation is shown where two facsimile machines are communicating over the public service telephone network without any delay. A command is being sent from the facsimile machine, which originated the call (the "calling fax"), and the command is received by the facsimile machine which was called (the "called fax"). The called fax answers the command with the response after a short delay (estimated to around 250 ms). The time in which the 3 second timer is running is marked as 'T'. In this case when the preamble is included in both command and response T is less than 1.5 seconds and the time will not expire.

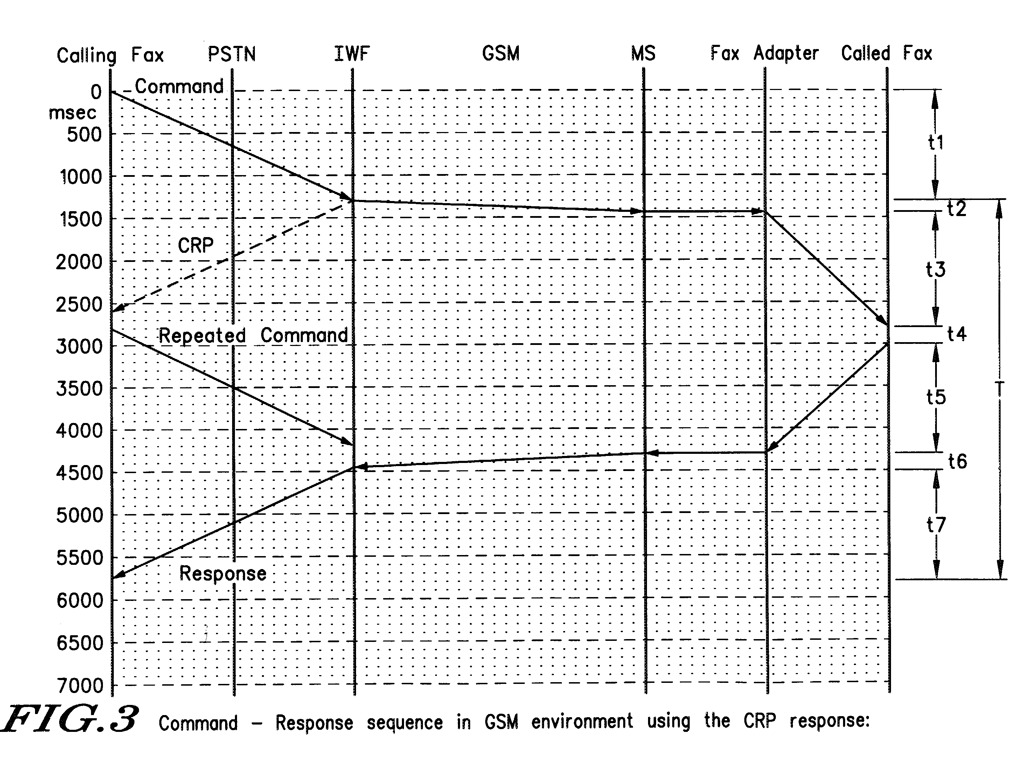

The GSM environment introduces command/response delays of more than 3 seconds, which causes the above mentioned timeout to happen whenever a command/response sequence including full preamble is sent. The command is then repeated at the same time as the response is coming from the receiving end. This causes further delay and makes the communication less stable. See Figure 3.

Another serious problem comes from another timeout specified in the T.30 recommendation. This occurs when one of the facsimile machines is waiting for a command to arrive, when the protocol is established.

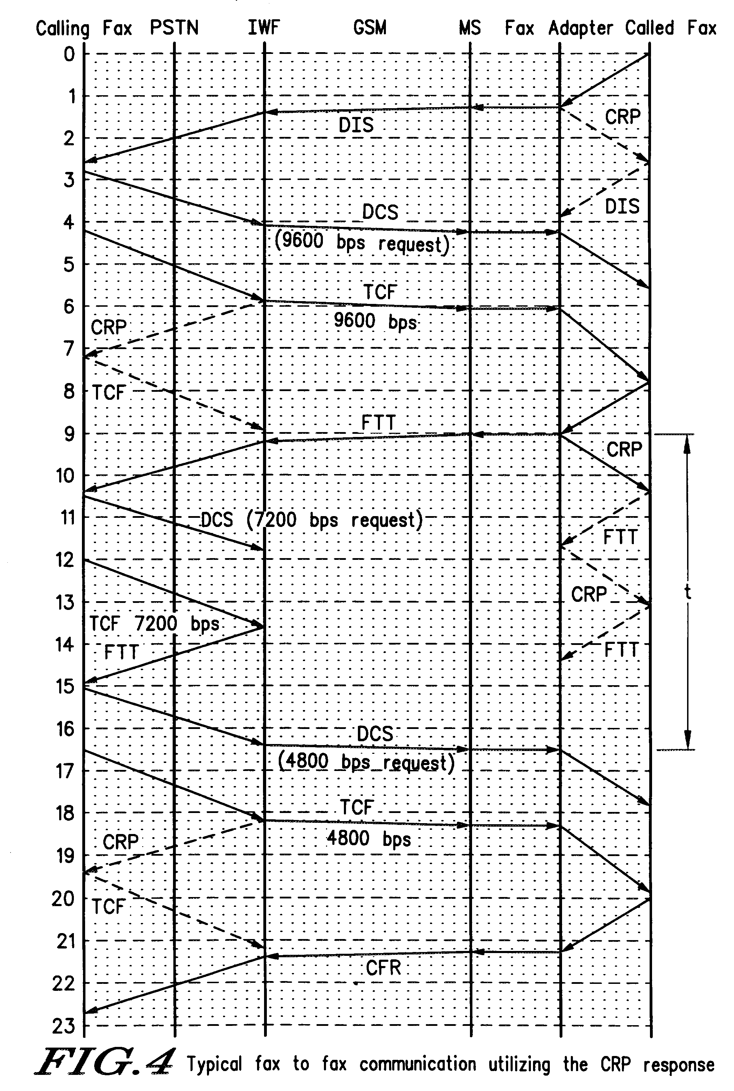

If no command has been received in 6 $\pm$ 1 seconds (T.30 section 5.4.3.1 time T2), the protocol will be restarted. A delay of 6 seconds in the GSM environment can occur if for example the calling fax is trying to set up a transmission speed, which is not implemented by GSM (7200 bits per second). In this case, the called fax will not get any commands for up to approximately 7 seconds and the protocol will then be restarted. This could possibly repeat itself many time. See also Figure 4. It is unrealistic to change existing facsimile machines to include longer timeouts.

Summary of the Invention

According to the present invention, there is provided communications apparatus for facsimile communication over a radio link, comprising facsimile-radio interface means for receiving a command from a facsimile machine having a time-out timer and initiating a radio communication in response to the command, characterised by means for automatically sending a signal to reset the timer of the facsimile machine on receipt of the command from the facsimile machine, so as to allow time for receipt of a response to the said radio communication.

The signal sent to the facsimile machine on receipt of the command from the facsimile machine may be a command repeat signal for causing the facsimile machine to repeat its command.

The facsimile-radio interface means may be the inter-working function 12 and base station/mobile switching centre 13 of Figure 1 (i.e. residing in the system infrastructure), or it may be the mobile station 14 and interface 15 of Figure 1 (i.e. residing in a subscriber unit). The same principal applies, irrespective of whether it is the facsimile machine 10 that initiates the facsimile machine communication or the facsimile machine 16.

The inter-working function 12 or the interface 15 respectively automatically generates "CRP" response which is a "command" repeat instruction defined in T.30 (section 5.3.6.1.8 part 2). All telefax machines conforming to the T.30 recommendation must support a CRP response. Accordingly, this invention takes advantage of this universal facility in telefax machines of different manufacturers to provide a simple and effective way of causing the facsimile machine to re-set its timeout timers while the necessary communications take place over the radio link and a response is received.

The above referenced section of the T.30 specification defines the CRP response as an optional response, to indicate that the previously received command was received in error and should be repeated. It is optional for facsimile machines conforming to the T.30 recommendation to be able to send this CRP, but according T.30 section 5.2 page 104, all facsimile machines must be able to handle the response. Accordingly, the present invention makes use of this response in a situation different to that for which it was originally intended and overcomes the problems of the prior art.

If the CRP response (including preamble) is sent by the GSM environment to the connected facsimile machine every time a command is received from it (and not only if the command was not recognized) then the attached facsimile machine will be kept busy long enough to prevent both the 3 second and the 6 second time from expiring.

The interface means may be arranged to recognise a repeated command from the facsimile machine and send a single further command repeat signal to the facsimile machine on receipt thereof. This allows for longer delays in the fax-GSM-fax communication, by sending one more CRPs to keep the communication alive.

Preferably no more than two CRP's are used in sequence, because the maximum number of unsuccessful attempts to send a given command is specified as 3 times in T.30 section 5.4.2.

Brief Description of the Drawings

Figure 1 shows a block diagram of a cellular telephone network architecture with facsimile machines (hereafter simply "fax" machine) connected in accordance with the prior art and the invention;
Figure 2 shows a "normal" communication where two fax machines are communicating over the public services telephone network without any delay, in accordance with the prior art;
Figure 3 shows a command-response sequence diagram in a GSM environment using the CRP response of the invention; and
Figure 4 shows a typical fax-GSM-fax communication, in which the fax machines are negotiating which speed to use for transfer of the document pages and in which the invention is implemented.

Detailed Destription of the Preferred Embodiment

Referring to Figure 3, the situation is illustrated where two fax machines are communicating in the GSM environment, which is shown as consisting of the "IWF" (inter-working function) connected to the public telephone service network. In the example shown, the calling fax is connected to the network. From the IWF, the communication is sent by radio to a mobile station "MS" which transfers the communication to the called fax via a fax adaptor. This communication is in the direction left to right on Figure 1.

The different delays in the command/response sequence have been named t1 to t7:

t1: 1 sec preamble and an 88 bit HDLC frame at 300 bps (88/300=293 msec): 1293ms
t2: GSM bearer service channel maximum delay (9600 bps/full rate): 100 ms time for transmitting 1293 ms 300 baud message (300/9600*1293ms): 40ms
t3: same as t1: 1293 ms
t4: command to response processing time in fax machine (loosely estimated); 250ms
t5: same as t1: 1293ms
t6: same as t2: 140ms
t7: same as t1: 1293 ms

Without the implementation of the present invention, the time T taken for the calling fax to receive a response to its initial command is given by:

$$T = t2 + t3 + t4 + t5 + t6 + t7 = 4409ms.$$

The 3-second timer in the calling fax will clearly expire in this case.

In accordance with the invention, however, the IWF 12 (Figure 1) sends a CRP response back to the fax machine 10 through the public telephone network 11. This is shown as a dotted line in Figure 3. This CRP response effectively causes the calling fax to start again, to repeat its command, re-set its time-out timers and recommence the 3-second time period. The repeated command is shown as a bold line in Figure 3. From this, it can be seen that the final response from the IWF is received well within 3 seconds after receipt of the repeat command by the IWF. In fact, only 1409ms will have expired. It will be appreciated that the diagram is merely a typical case and the various times are not specific.

In accordance with the preferred embodiment of the invention, the IWF in fact issues a further CRP command to the calling fax in response to the repeated command from the calling fax. This further CRP command is not shown in the Figure.

In the meantime, the IWF does not set up a further GSM communication in response to the repeated command received at T = 4200, but rather this repeated command is filtered out by the GSM system in accordance with GSM specification 03.45, section 4.2.1.2. The use of the CRP command therefore has no adverse effects and does not reach the fax machine 16 at the other end.

In the initial exchange of commands during the set up of a fax communication, a fax machine can be in the position of waiting for one of two events: a response to its own command, or an expected further command. Figure 3 illustrated the case of waiting for a response to the fax machine's own command, in which the 3-second timeout period is critical. Figure 4 further illustrates this and in addition illustrates the case where the called fax waits for a further command from the calling fax.

In Figure 4, events setting up the communication prior to t = 0 are not shown. The first communication from the called fax (DIS) is in response to earlier events. The calling fax issues a DCS (digital command signal) containing speed information of the calling fax for its next transmission. The next transmission TCF is carried out at the speed indicated in the DCS signal, which in this case is 9600 bps. The called fax issues an FTT command in response (which need not be described in detail) and in the meantime the IWF issues the CRP command in accordance with the invention, to allow the calling fax to wait for the FTT signal from the called fax. At this point, the calling fax tries to use a baud rate of 7200 bits per second, which is not supported by GSM. The sequence using a 7200bps is filtered out by the IWF. During this part of the communication, the called fax will not receive any command for more than 7 seconds (shown as t on the figure).

A command which resets the fax machine time-out timer is again made use of in accordance with the invention, this time at the fax adaptor 15. The command used may be the CRP command as shown in the figure, but it will be appreciated that other commands could be used to reset the 6-second time-out timer instead of the CRP command. Two CRP commands are initiated by the fax adaptor 15 (although in the Figure, two CRPs are not in fact necessary). This causes re-setting of the 6-second timer of the called fax, but in this case a DCS at an appropriate speed of 4800bps is received before the end of the 6-second timeout period. The further steps in Figure 4 are self-explanatory.

Not all the issued CRP commands are shown in Figure 4 and the figure is generally simplified for the purposes of explanation. The same procedures occur if the subscriber unit fax machine is the calling fax.

## Claims

1. Communications apparatus for facsimile communication over a radio link, comprising facsimile-radio interface means for receiving a command from a facsimile machine having a time-out timer and initiating a radio communication in response to the command, characterised by means for automatically sending a signal to reset the timer of the facsimile machine on receipt of the command from the facsimile machine, so as to allow time for receipt of a response to the said radio communication.

2. Apparatus according to claim 1, wherein the signal sent to the facsimile machine on receipt of the command from the facsimile machine is a command repeat signal for causing the facsimile machine to repeat its command.

3. Apparatus according to claim 1 or 2, wherein said means for sending said command repeat signal are arranged to recognise a repeated command from the facsimile machine and send a single further command repeat signal to the facsimile machine on receipt thereof.

4. Apparatus according to claim 1, 2 or 3, wherein the facsimile-radio interface means resides in the infrastructure of a cellular radio system.

5. Apparatus according to claim 1, 2 or 3, wherein the facsimile-radio interface means resides in a subscriber unit of a cellular radio system.

## Patentansprüche

1. Nachrichtenübertragungs-Einrichtung zur Faksimile-Übertragung über eine Funkverbindung, mit einem Faksimile-Funk-Schnittstellenmittel zum Empfangen eines Befehls von einem Faxgerät mit einem Zeitablauf-Zeitgeber und zum Initialisieren einer Funkübertragung in Reaktion auf den Befehl, **gekennzeichnet durch** Mittel zum automatischen Senden eines Signals zum Rückstellen des Zeitgebers des Faxgerätes aufgrund des Empfangs des Befehls von dem Faxgerät, um so Zeit zum Empfang einer Reaktion auf die Funkübertragung zuzulassen.

2. Einrichtung nach Anspruch 1, bei der das an das Faxgerät aufgrund des Empfangs des Befehls von dem Faxgerat gesendete Signal ein Befehls-Wiederholsignal ist, um das Faxgerät zum Wiederholen seines Befehls zu veranlassen.

3. Einrichtung nach Anspruch 1 oder 2, bei der das Mittel zum Aussenden des Befehls-Wiederholsignals ausgelegt ist, einen wiederholten Befehl von dem Faxgerät zu erkennen und aufgrund des Empfangs desselben ein einzelnes weiteres Befehls-Wiederholsignal an das Faxgerät zu senden.

4. Einrichtung nach Anspruch 1, 2 oder 3, bei der das Fax-Funkschnittstellenmittel in der Infrastruktur eines zellularen Funksystems sitzt.

5. Einrichtung nach Anspruch 1, 2 oder 3, bei der das Fax-Funkschnittstellenmittel in einer Teilnehmereinheit eines zellularen Funksystems sitzt.

## Revendications

1. Appareil de communication pour communication par télécopie par l'intermédiaire d'une liaison radio, comprenant un moyen d'interface télécopieur-radio pour recevoir une commande provenant d'un télécopieur comportant un temporisateur de temps mort et amorçant une communication radio en réponse à la commande, caractérisé par un moyen d'émission automatique d'un signal pour remettre à zéro le temporisateur du télécopieur, à réception de la commande venant du télécopieur, de manière à laisser du temps pour la réception d'une réponse à ladite communication radio.

2. Appareil suivant la revendication 1, dans lequel le signal envoyé au télécopieur à réception de la commande venant du télécopieur est un signal de répétition de commande pour amener le télécopieur à répéter sa commande.

3. Appareil suivant la revendication 1 ou 2, dans lequel ledit moyen d'émission dudit signal de répétition de commande est configuré de manière à reconnaître une commande répétée provenant du télécopieur et à envoyer un seul autre signal de répétition de commande au télécopieur à sa réception.

4. Appareil suivant la revendication 1, 2 ou 3, dans lequel le moyen d'interface télécopieur-radio réside dans l'infrastructure d'un système radiocellulaire.

5. Appareil suivant la revendication 1, 2 ou 3, dans lequel le moyen d'interface télécopieur-radio réside dans une unité d'abonnés d'un système radiocellulaire.

*FIG.1*

*FIG.2* Normal FAX communication over PSTN:

EP 0 493 551 B1

**FIG.3** Command – Response sequence in GSM environment using the CRP response:

Calling Fax  PSTN  IWF  GSM  MS  Fax Adapter  Called Fax

CRP

DIS

DCS
(9600 bps request)

DIS

TCF
9600 bps

CRP

TCF

FTT

CRP

DCS (7200 bps request)

FTT

CRP

TCF 7200 bps

FTT

DCS
(4800 bps request)

TCF
4800 bps

CRP

TCF

CFR

t

*FIG.4* Typical fax to fax communication utilizing the CRP response